# EUROPÄISCHE PATENTSCHRIFT

(11) **EP 3 471 927 B1**
(45) Veröffentlichungstag und Bekanntmachung des Hinweises auf die Patenterteilung: **10.05.2023**
(21) Anmeldenummer: 17728771.1
(22) Anmeldetag: 07.06.2017
(51) Int. Cl.: B25J 9/16

(54) **ÜBERWACHUNG EINER ANLAGE MIT WENIGSTENS EINEM ROBOTER**
MONITORING A PLANT EQUIPPED WITH AT LEAST ONE ROBOT
SURVEILLANCE D'UNE INSTALLATION COMPRENANT AU MOINS UN ROBOT

(30) Priorität: 20.06.2016 DE 102016007519
(43) Veröffentlichungstag der Anmeldung: 24.04.2019
(73) Patentinhaber: KUKA Deutschland GmbH, 86165 Augsburg (DE)
(72) Erfinder: KEIBEL, Andreas, 86161 Augsburg (DE); RIEDEL, Martin, 86165 Augsburg (DE)
(74) Vertreter: Oelke, Jochen
(86) Internationale Anmeldenummer: PCT/EP2017/000659
(87) Internationale Veröffentlichungsnummer: WO 2017/220186

(56) Entgegenhaltungen:
- EP-A1- 1 752 702
- EP-A1- 1 820 611
- EP-A1- 3 017 920
- WO-A1-2009/018812
- WO-A1-2015/114089
- DE-A1-102004 048 563

## Beschreibung

Die vorliegende Erfindung betrifft ein Verfahren und ein Mittel zum Überwachen einer Anlage mit wenigstens einem, insbesondere mehreren, Robotern sowie ein System mit der Anlage und dem Mittel sowie ein Computerprogrammprodukt.

Aus betriebsinterner Praxis ist eine sogenannte "Dark Factory" mit mehreren Robotern bekannt, in der sich im Normalbetrieb keine Personen aufhalten, so dass die Roboter ohne Schutzzäune oder dergleichen arbeiten können, was Platzbedarf, Logistik, Kooperation und dergleichen erheblich verbessert.

Insbesondere zu Einrichte-, Kontroll-, Wartungs- oder ähnlichen Zwecken müssen sich trotzdem manchmal Personen in solchen vollautomatisierten Anlagen aufhalten.

Die EP 1 820 611 A1 zeigt ein industrielles Robotersystem mit wenigstens einem Manipulator und wenigstens einer Bedieneinheit. Das Robotersystem ist ausgebildet, die Position der Bedieneinheit zu detektieren und den Manipulator abhängig davon beispielsweise zu verlangsamen oder zu stoppen.

Die EP 1 752 702 A1 zeigt ein Verfahren und ein System zur Überwachung von Kollisionen zwischen Robotern und Personen. Die Position einer Person wird dabei mittels eines Navigationssystems laufend erfasst und mit einer Sicherheitszone abgeglichen. Der Eintritt in die Sicherheitszone hat einer Überführung des Roboters in einen gefahrlosen Zustand zur Folge.

Die DE 10 2004 048563 A1 zeigt eine Überwachungseinrichtung für Roboter, welche mit einem mobilen Bediengerät steuerbar sind. Das Bediengerät weist dabei eine Sendeeinheit auf, deren Signale von mehreren Empfangseinheiten zur Durchführung eine Kreuzpeilung empfangen werden. Die angepeilte Position ist für den Roboter ein nicht ansteuerbares dynamisches Hindernis innerhalb seines Arbeitsraums.

Die WO 2009/018812 A1 zeigt eine Überwachung eines Roboters, mit einem zugangsgeschützten und einen zugänglichen Raum (Bewegungsraum). Innerhalb des mittels Sensoren optischen überwachten Bewegungsraums wird der Roboter automatisch gestoppt, wenn sich Personen oder Hindernisse im überwachten Bewegungsraum befinden

Die WO 2015/114089 A1 zeigt eine Sicherheitseinrichtung und ein Sicherheitsverfahren für Werker im Arbeitsbereich von Industrierobotern, wobei eine Sicherheitseinrichtung die räumliche Position und evtl. eine Bewegung eines Werkers permanent erfasst. Ferner wird auch die Information über den Gefahrenbereich des Roboters verarbeitet. Es findet dabei eine Überwachung auf Kollisionen oder Kollisionsgefahren zwischen Roboter und Werker statt. Bei Kollision oder Kollisionsgefahr wird dem Werker ein Warnsignal mitgeteilt.

Eine Aufgabe der vorliegenden Erfindung ist es, den Betrieb einer Anlage mit wenigstens einem Roboter, insbesondere den Betrieb einer, insbesondere vollautomatisierten, Anlage mit mehreren Robotern zu verbessern.

Diese Aufgabe wird durch ein Verfahren mit den Merkmalen des Anspruchs 1 gelöst.

Ansprüche 10 bis 12 stellen ein Mittel, bzw. Computerprogrammprodukt zur Durchführung eines hier beschriebenen Verfahrens bzw. ein System mit einem hier beschriebenen Mittel unter Schutz. Die Unteransprüche betreffen vorteilhafte Ausführungen.

Erfindungsgemäß weist ein Verfahren zum Überwachen einer Anlage mit wenigstens einem Roboter, insbesondere mehreren Robotern, die Schritte auf:
- Überwachen eines Abstandsbereichs wenigstens eines Roboters der Anlage; und
- Überführen dieses Roboters in einen sicheren Zustand auf Basis bzw. in Abhängigkeit von einer Erfassung einer Position wenigstens einer Person innerhalb dieses Abstandsbereichs mit den Schritten:
- Durchführen (S70) eines Arbeitsprozesses des Roboters bis zu einem, insbesondere vorab und/oder prozessbedingt und/oder automatisch oder durch einen Bediener, vorgegebenen Unterbrechungspunkt; und
   - Unterbrechen (S70) des Arbeitsprozesses, insbesondere Stillsetzten des Roboters, insbesondere ohne Unterbrechung seiner Energieversorgung, und/oder Deaktivieren wenigstens eines, insbesondere robotergeführten, Werkzeugs, an diesem Unterbrechungspunkt,
   - wobei der Abstandsbereich auf Basis einer Arbeitszeit bis zu einem Unterbrechungspunkt, insbesondere einer maximalen Arbeitszeit zwischen zwei Unterbrechungspunkten und/oder einer Arbeitszeit bis zu einem nächsten Unterbrechungspunkt in dem Arbeitsprozess vorgegeben ist.

Nach einer Ausführung der vorliegenden Erfindung ist ein Mittel zum Überwachen einer Anlage mit wenigstens einem Roboter, insbesondere mehreren Robotern, insbesondere hard- und/oder software-, insbesondere programmtechnisch, zur Durchführung eines hier beschriebenen Verfahrens eingerichtet und/oder wird hierzu verwendet und/oder weist auf:
- Mittel zum Überwachen eines Abstandsbereichs wenigstens eines Roboters der Anlage; und
- Mittel zum Überführen dieses Roboters in einen sicheren Zustand auf Basis bzw. in Abhängigkeit von einer Erfassung einer Position wenigstens einer Person innerhalb dieses Abstandsbereichs.

Die Anlage ist in einer Ausführung eine vollautomatisierte Anlage bzw. zum personenfreien Normalbetrieb eingerichtet bzw. vorgesehen bzw. wird in einer (Normal)Betriebsart personenfrei betrieben.

In einer Ausführung ist wenigstens ein Roboter der Anlage trenneinrichtungs-, insbesondere schutzraumlos, insbesondere befindet sich in einer Ausführung wenigstens in einem (trenneinrichtungs-, insbesondere schutzraumlosen) Bereich wenigstens eines Roboters der Anlage, der sich durch Vergrößerung des Arbeitsraums dieses Roboters um wenigstens 50%, insbesondere wenigstens 100%, ergibt, kein den Roboter bzw. Arbeitsraum abtrennender Schutzzaun. Hierdurch kann insbesondere dessen Logistik und/oder Kooperation verbessert und/oder sein Platzbedarf reduziert werden.

In einer Ausführung weisen der bzw. einer oder mehrere Roboter (der Anlage) (jeweils) wenigstens vier, insbesondere wenigstens sechs, insbesondere wenigstens sieben, Gelenke, insbesondere Drehgelenke, auf, die in einer Ausführung, insbesondere elektromotorisch, aktuiert sind bzw. werden.

In einer Ausführung sind der bzw. einer oder mehrere Roboter (der Anlage) stationär oder mobil.

Insbesondere bei vollautomatisierten Anlagen und/oder redundanten und/oder mobilen und/oder trenneinrichtungslosen Robotern kann in einer Ausführung durch eine Überführung in einen sicheren Zustand auf Basis einer Anwesenheit wenigstens einer Person innerhalb eines Arbeitsbereichs die Sicherheit erhöht werden.

In einer Ausführung überwacht das Verfahren bzw. Mittel Abstandsbereiche mehrerer Roboter der Anlage und überführt wenigstens einen, insbesondere mehrere, insbesondere alle, Roboter auf Basis einer Anwesenheit wenigstens einer Person innerhalb wenigstens eines Arbeitsbereichs dieser Roboter (jeweils) in einen sicheren Zustand bzw. ist hierzu eingerichtet.

Hierdurch können in einer Ausführung insbesondere komplexe Arbeitsprozesse mehrerer, insbesondere kooperierender, Roboter vorteilhaft gesteuert werden.

In einer Ausführung überwacht das Verfahren bzw. Mittel Abstandsbereiche mehrerer Roboter der Anlage und überführt auf Basis einer Anwesenheit wenigstens einer Person innerhalb wenigstens eines Arbeitsbereichs dieser Roboter jeweils, insbesondere nur, den- bzw. diejenigen Roboter in einen sicheren Zustand, in dessen/deren Abstandsbereich(en) sich wenigstens eine Person befindet bzw. ist hierzu eingerichtet.

Hierdurch werden in einer Ausführung Arbeitsprozesse nicht betroffener Roboter vorteilhaft nicht beeinträchtigt.

Ein Abstandsbereich eines Roboters ist in einer Ausführung ein fester oder, insbesondere während eines Arbeitsprozesses des Roboters variabler, Flächen- oder Raumbereich, der in einer Ausführung den Roboter, insbesondere einen Arbeitsraum und/oder nachfolgend erläuterten Sicherheitsbereich des Roboters, ganz oder teilweise, insbesondere konzentrisch und/oder ring-, schalen- bzw. schlauchartig, umschließt, insbesondere mit seiner roboterzugewandten Innengrenze eine Außengrenze des Arbeitsraums bzw. Sicherheitsbereichs umgibt, insbesondere an diese anschließt.

In einer Ausführung überführt das Verfahren bzw. Mittel den bzw. die Roboter in einen sicheren Zustand, falls einer Position bzw. Anwesenheit wenigstens einer Person innerhalb des entsprechenden Abstandsbereichs erfasst wird, insbesondere in Abhängigkeit von weiteren, insbesondere nachfolgend erläuterten, Bedingungen, beispielsweise der bzw. bei Nicht-Betätigung einer Zustimmeinrichtung, Bedienereingabe zum Fortsetzen eines unterbrochenen Arbeitsprozesses oder dergleichen, bzw. ist hierzu eingerichtet.

Das Überführen weist in einen sicheren Zustand (jeweils) die Schritte auf:
- Durchführen eines, insbesondere vorab, vorgegebenen, insbesondere gespeicherten bzw. programmierten, Arbeitsprozesses, insbesondere Programmablaufs, des Roboters bis zu einem, insbesondere vorab und/oder und/oder prozessbedingt und/oder automatisch oder durch einen Bediener, vorgegebenen Unterbrechungspunkt; und
- Unterbrechen des Arbeitsprozesses, insbesondere Stillsetzten des Roboters, insbesondere ohne Unterbrechung seiner Energieversorgung, und/oder Deaktivieren wenigstens eines, insbesondere robotergeführten, Werkzeugs, an diesem Unterbrechungspunkt.

Entsprechend weist in einer Ausführung (wenigstens) ein Mittel zum Überführen in einen sicheren Zustand (jeweils) auf:
- Mittel zum Durchführen eines, insbesondere vorab, vorgegebenen, insbesondere gespeicherten bzw. programmierten, Arbeitsprozesses, insbesondere Programmablaufs, des Roboters bis zu einem, insbesondere vorab und/oder und/oder prozessbedingten und/oder automatisch oder durch einen Bediener, vorgegebenen Unterbrechungspunkt; und
- Mittel zum Unterbrechen des Arbeitsprozesses, insbesondere Stillsetzten des Roboters, insbesondere ohne Unterbrechung seiner Energieversorgung, und/oder Deaktivieren wenigstens eines, insbesondere robotergeführten, Werkzeugs, an diesem Unterbrechungspunkt

Indem der Arbeitsprozess nicht unmittelbar bzw. willkürlich, sondern an vorab festgelegten, hierfür geeigneten Punkten, insbesondere im Arbeitsprozess bzw. Programmablauf, unterbrochen wird, wird der Arbeitsprozess vorteilhaft wenig(er) gestört, insbesondere verglichen mit einem "harten" Notaus oder dergleichen.

So können insbesondere in einer Ausführung Bearbeitungsschritte innerhalb des Arbeitsprozesses noch zu Ende geführt, beispielsweise eine Kleberaupe, Schweißnaht, Lackierbahn oder dergleichen vollständig bzw. wie vorgesehen beendet und der Roboter erst anschließend, insbesondere vor Beginn eines neuen Bearbeitungsschrittes, beispielsweise einer neuen Kleberaupe, Schweißnaht, Lackierbahn oder dergleichen, stillgesetzt werden.

Es werden bzw. sind ein oder mehrere Unterbrechungspunkte innerhalb des Arbeitsprozesses vorab bzw. vor Beginn bzw. Durchführung des Arbeitsprozesses vorgebbar, insbesondere vorgegeben, insbesondere durch entsprechende Befehle in einem (Arbeitsprozess)Programm(ablauf).

Hierdurch können diese vorteilhaft vorgegeben, insbesondere optimiert werden.

Zusätzlich sind Unterbrechungspunkte auch nach Beginn bzw. während einer Durchführung des Arbeitsprozesses vorgebbar, insbesondere vorgegeben, sein bzw. werden.

Hierdurch kann in einer Ausführung auf aktuelle Ereignisse, beispielsweise variable Prozessparameter, reagiert werden.

Zusätzlich oder alternativ werden bzw. sind in einer Ausführung ein oder mehrere Unterbrechungspunkte (arbeits)prozessbedingt vorgebbar, insbesondere vorgegeben, insbesondere in Abhängigkeit von wenigstens einem Arbeitsprozessschritt, insbesondere nur nach Beendigung bestimmter, insbesondere vorgegebener, Arbeitsprozessschritte, beispielsweise dem Abfahren einer Kleberaupe, Schweißnaht, Lackierbahn oder dergleichen.

Hierdurch werden in einer Ausführung diese Arbeitsprozessschritte nicht gestört.

Zusätzlich oder alternativ werden bzw. sind in einer Ausführung ein oder mehrere Unterbrechungspunkte automatisch vorgebbar, insbesondere vorgegeben, insbesondere nach Konfiguration der Arbeitsprozessschritte.

Hierdurch wird in einer Ausführung die Konfiguration insbesondere komplexerer Arbeitsprozessschritte vereinfacht, insbesondere bei kooperierenden Robotern oder dergleichen.

Zusätzlich oder alternativ werden bzw. sind in einer Ausführung ein oder mehrere Unterbrechungspunkte durch einen Bediener bzw. manuell vorgebbar, insbesondere vorgegeben, beispielsweise durch Einfügen entsprechender Befehle in einem (Arbeitsprozess)Program m(ablauf).

Hierdurch kann in einer Ausführung der Arbeitsprozess bzw. eventuelle Unterbrechungen optimiert werden.

Es wird bzw. ist (wenigstens) ein Abstandsbereich, insbesondere seine, insbesondere minimale oder in Richtung einer roboternächsten Person gerichete, Erstreckung, insbesondere zwischen einer (roboterabgewandten) Außengrenze, insbesondere sein (minimaler) Durchmesser, oder zwischen einer (roboterabgewandten) Außen- und einer (roboterzugewandten) Innengrenze, insbesondere seine (minimale) "Wandstärke", auf Basis bzw. in Abhängigkeit von einer Arbeits(prozess)zeit, insbesondere des Roboters, bis zu einem Unterbrechungspunkt, insbesondere einer maximalen Arbeitszeit zwischen zwei Unterbrechungspunkten und/oder einer Arbeitszeit bis zu einem nächsten Unterbrechungspunkt in dem Arbeitsprozess vorgebbar, insbesondere vorgegeben.

Mit anderen Worten dient der Abstandsbereich als (zeitlicher) Puffer bzw. Pufferzone zum (vollständigen bzw. programmgemäßen) Beenden eines Arbeitsprozessschritts, den der Roboter bei Eintritt einer Person in seinen Abstandsbereich gerade ausführt, bis die Person der Roboter bzw. dessen Arbeitsraum bzw. Sicherheitsbereich (voraussichtlich) erreicht.

Besteht beispielsweise ein Arbeitsprozess auf vier aufeinanderfolgenden Klebe-, Schweiß- oder Lackierbahnen oder dergleichen, die unterschiedliche Arbeitszeiten aufweisen bzw. benötigen, so wird bzw. ist in einer Ausführung der Abstandsbereich auf Basis der längsten dieser Arbeitszeiten vorgegeben.

Hierdurch kann sichergestellt werden, dass jeder Arbeitsprozessschritt vollständig zu Ende geführt werden kann.

Gleichermaßen ist der Abstandsbereich, der somit während der Durchführung des Arbeitsprozesses variiert, auf Basis der Arbeitszeit bis zu dem nächsten Unterbrechungspunkt in dem (aktuellen) Arbeitsprozess bzw. Programmablauf vorgegeben werden bzw. sein.

Hierdurch kann der Abstandsbereich prozessangepasst reduziert und so ein unnötiges Überführen in den sicheren Zustand durch eine passierende Person vermieden werden.

In einer Ausführung wird bzw. ist der Abstandsbereich so vorgegeben, dass ein, insbesondere minimaler oder in Richtung der roboternächsten Person gerichteter, Abstand einer (äußeren) Grenze des Abstandsbereichs zu dem Roboter, dessen aktueller oder maximaler Auslage bzw. Erstreckung bzw. dessen aktuellem oder maximalen Arbeitsraum und/oder einem nachfolgend erläuterten Sicherheitsbereich, insbesondere dessen (äußerer) Grenze, gleich dem oder größer, insbesondere um einen vorbestimmten Faktor größer, als das Produkt dieser Arbeitszeit und einer vorgegebenen oder erfassten, insbesondere aktuellen und/oder geschätzten, Personengeschwindigkeit ist, insbesondere größer oder gleich dem Produkt der maximalen Arbeitszeit zwischen zwei Unterbrechungspunkten oder der Arbeitszeit bis zu dem nächsten Unterbrechungspunkt in dem Arbeitsprozess multipliziert mit einer Geschwindigkeit einer, insbesondere roboternächsten, Personen, wobei diese Geschwindigkeit in einer Ausführung fest bzw. als Minimalwert vorgegeben sein und vorzugsweise wenigstens 1 m/s, insbesondere wenigstens 5 km/h, insbesondere wenigstens 10 km/h, und/oder höchstens 50 km/h, insbesondere höchstens 30 km/h, betragen oder in einer anderen Ausführung eine aktuell ermittelte Geschwindigkeit einer sich dem Roboter nähernden und/oder roboternächsten, Person sein kann.

Beträgt beispielsweise die maximale Arbeitszeit zum Abfahren einer (längsten) Klebe-, Schweiß- oder Lackierbahnen oder dergleichen oder die restliche Arbeitszeit zum Abfahren einer aktuellen Klebe-, Schweiß- oder Lackierbahnen oder dergleichen 12 s und wird vorausgesetzt, dass sich Personen innerhalb der Anlage mit maximal 1 m/s bzw. 3,6 km/h (fort- bzw. von der Stelle) bewegen, so beträgt in einer Ausführung eine (Mindest)Erstreckung eines Abstandsbereichs um einen Arbeitsraum oder Sicherheitsbereich den Roboter 12 s · 1 m/s = 12 m.

In einer Ausführung setzt das Verfahren bzw. Mittel den unterbrochenen Arbeitsprozess auf Basis einer Erfassung einer Bedienereingabe und/oder einer Abwesenheit von Personen innerhalb des Abstandsbereichs fort, insbesondere durch Bewegen des Roboters und/oder Aktivieren des Werkzeugs, bzw. ist hierzu eingerichtet, insbesondere, falls einer entsprechende Bedienereingabe und/oder eine Abwesenheit von Personen innerhalb des Abstandsbereichs erfasst wird.

Somit kann in einer Ausführung eine Person, die sich innerhalb des Abstandsbereichs befindet, durch entsprechende Bedienereingabe, insbesondere manuell, eine Fortsetzung bzw. Weiterführung des unterbrochenen Arbeitsprozesses kommandieren, wobei dieser dann nicht aufgrund der fortdauernden Anwesenheit der Person im Abstandsbereichs erneut unterbrochen wird.

Zusätzlich oder alternativ kann der Arbeitsprozess automatisch nach bzw. durch Verlassen des Abstandsbereichs fortgesetzt werden.

In einer Ausführung weist das Verfahren wenigstens einen der Schritte:
- Überwachen des sicheren Zustands, insbesondere eines Stillstands des Roboters und/oder einer Inaktivität des Werkzeugs; und/oder
- Überwachen eines Sicherheitsbereichs des Roboters;
   und den Schritt auf:
- Auslösen einer Sicherheitsreaktion, insbesondere Umschalten des Roboters in einen Mensch-Roboter-Kollaborationsmodus und/oder Reduzieren einer Geschwindigkeit des Roboters oder Durchführen eines Notaus des Roboters, auf Basis einer Erfassung einer Verletzung des sicheren Zustands und/oder einer Position wenigstens einer Person innerhalb des Sicherheitsbereichs.

Entsprechend weist in einer Ausführung das Mittel zum Überwachen der Anlage wenigstens:
- Mittel zum Überwachen des sicheren Zustands, insbesondere eines Stillstands des Roboters und/oder einer Inaktivität des Werkzeugs; und/oder
- Mittel zum Überwachen eines Sicherheitsbereichs des Roboters;
   und:
- Mittel zum Auslösen einer Sicherheitsreaktion, insbesondere Umschalten des Roboters in einen Mensch-Roboter-Kollaborationsmodus und/oder Reduzieren einer Geschwindigkeit des Roboters oder Durchführen eines Notaus des Roboters, auf Basis einer Erfassung einer Verletzung des sicheren Zustands und/oder einer Position wenigstens einer Person innerhalb des Sicherheitsbereichs auf.

In einer Ausführung liegt der Sicherheitsbereich ganz oder teilweise innerhalb des Abstandsbereichs, in einer Ausführung kann er einen (maximalen) Arbeitsbereich des Roboters umfassen bzw. aufweisen, insbesondere gleich diesem Arbeitsbereich oder um einen vorbestimmten (Sicherheits)Faktor größer al dieser Arbeitsbereich sein.

In einer Ausführung sind das Überwachen des sicheren Zustands und des sicheren Zustands kummulativ bzw. "UND"-verknüpft bzw. wird die Sicherheitsreaktion nur ausgelöst, falls sowohl der sichere Zustand verletzt ist als auch wenigstens eine Person sich im Sicherheitsbereich aufhält.

Hierdurch kann beispielsweise der Roboter bei Eintritt einer Person zunächst seinen (nächsten) Unterbrechungsprunkt anfahren und in diesem sicher stillgesetzt und ein robotergeführtes Werkzeug deaktiviert, beispielsweise ein Schweißstrom, Klebstoffoder Lackiermittelfluss unterbrochen werden. In diesem sicheren Zustand kann die Person sich dem Roboter weiter nähern und beispielsweise zu Inspektionszwecken seinen Sicherheitsbereich betreten, solange der sichere Zustand gewährleistet ist. Andererseits darf sich der Roboter noch bewegen, solange sich die Person noch nicht im Sicherheitsbereich befindet.

In einer Ausführung sind das Überwachen des sicheren Zustands und des sicheren Zustands disjunktiv bzw. "ODER"-verknüpft bzw. wird die Sicherheitsreaktion ausgelöst, falls wenigstens der sichere Zustand verletzt ist oder wenigstens eine Person sich im Sicherheitsbereich aufhält.

Gleichermaßen kann in einer Ausführung auch nur der sichere Zustand oder nur der Sicherheitsbereich überwacht werden und eine Sicherheitsreaktion auslösen.

In einer Ausführung ist bzw. wird der Roboter in dem Mensch-Roboter-Kollaborationsmodus nachgiebig(er) geregelt, insbesondere derart, dass er keine einen vorgegebenen Grenzwert übersteigenden Kräfte auf eine Person in seinem Arbeitsbereich ausüben kann bzw. wenigstens vorgegebenen Mindestkräften ausweicht.

In einer Ausführung wird eine, insbesondere durch den bzw. in dem Arbeitsprozess, vorgegebene Geschwindigkeit des Roboters reduziert, insbesondere auf eine vorgegebene Höchstgeschwindigkeit und/oder um einen vorgegebenen Reduzierfaktor, wobei diese Höchstgeschwindigkeit bzw. dieser Reduzierfaktor in einer Ausführung von bestimmten aktuellen Bedingungen, insbesondere einem Abstand der (nächsten) Person zum Roboter, der Betätigung einer Zustimmeinrichtung oder dergleichen, abhängen. In einer Ausführung ist die reduzierte Geschwindigkeit von Null verschieden, beträgt insbesondere wenigstens 1% einer normalen Arbeitsprozessgeschwindigkeit, so dass der Roboter den Arbeitsprozess (verlangsamt) weiterführt. In einer anderen Ausführung kann die Geschwindigkeit auch auf Null reduziert werden.

Unter einem Notaus wird vorliegend insbesondere in fachüblicher Weise ein STOP0 oder STOP1 des Roboters bzw. Arbeitsprozesses, insbesondere ein sofortiges bzw. unmittelbares Stillsetzen des Roboters unter sofortiger bzw. unmittelbarer (STOP0) oder anschließender (STOP1) Unterbrechung einer Antriebsenergieversorgung, verstanden.

In einer Ausführung wird bzw. ist ein Anlagenbereich vorgegeben, der in einer Ausführung die Arbeitsbereiche aller Roboter der Anlagen umfasst bzw. einschließt.

In einer Ausführung weist das Verfahren wenigstens einen der Schritte auf:
- Zugangskontrolle und/oder -vereinzelung zu dem vorgegebenen Anlagenbereich; und/oder
- Ermitteln von Positionen aller Personen innerhalb des vorgegebenen Anlagenbereichs.

Entsprechend weist in einer Ausführung das Mittel zum Überwachen der Anlage auf:
- Mittel zur Zugangskontrolle und/oder -vereinzelung zu dem vorgegebenen Anlagenbereich; und/oder
- Mittel zum Ermitteln von Positionen aller Personen innerhalb des vorgegebenen Anlagenbereichs.

Durch eine Zugangskontrolle und/oder -vereinzelung, insbesondere eine oder mehrere Schleusen, Drehkreuze oder dergleichen, kann in einer Ausführung sichergestellt werden, dass alle Personen innerhalb des vorgegebenen Anlagenbereichs erfasst bzw. berücksichtigt werden.

Durch die Ermitteln von Positionen aller Personen innerhalb des vorgegebenen Anlagenbereichs kann in einer Ausführung sichergestellt werden, dass jeder Eintritt in einen Abstandsbereich erfasst bzw. berücksichtigt und somit jede Person in der Anlage vorteilhaft geschützt wird.

Nach einer Ausführung der vorliegenden Erfindung wird bzw. werden eine Position wenigstens einer Person, insbesondere aller Personen innerhalb des vorgegebenen Anlagenbereichs, (jeweils) auf Basis einer von der (jeweiligen) Person tragbaren, insbesondere getragenen, insbesondere mitgeführten, Vorrichtung ermittelt. Entsprechend weist nach einer Ausführung der vorliegenden Erfindung das System die Anlage, wenigstens eine solche Vorrichtung sowie Mittel zum Ermitteln eine Position einer Person, insbesondere innerhalb des vorgegebenen Anlagenbereichs, auf Basis dieser tragbaren, insbesondere getragenen, insbesondere mitgeführten, Vorrichtung auf. Eine Ausführung der vorliegenden Erfindung betrifft die tragbare Vorrichtung selber bzw. deren Verwendung zum Erfassen einer Position einer Person in hier beschriebener Weise, die somit insbesondere ein Mittel im Sinne der vorliegenden Erfindung sein kann.

Hierdurch können in einer Ausführung, insbesondere im Gegensatz zu einer abdeckenden Überwachung von Grenzen und/oder kompletten Bereichen, die Sicherheit erhöht und/oder der Aufwand reduziert werden.

In einer Ausführung ist die Vorrichtung, auf deren Basis die Position einer diese tragenden Person ermittelt wird, einteilig ausgebildet, in einer Weiterbildung weist sie insbesondere (stets) nur eine gemeinsame Außenoberfläche, insbesondere ein einziges Außengehäuse, auf. Hierdurch kann die Vorrichtung kompakt(er) ausgebildet und/oder gehandhabt werden. In einer anderen Ausführung ist die Vorrichtung, auf deren Basis die Position einer diese tragenden Person ermittelt wird, mehrteilig ausgebildet, in einer Weiterbildung weist sie wenigstens zwei separate, insbesondere lösbar miteinander verbundene oder frei bzw. unabhängig voneinander handhab-, insbesondere bewegbare, Teile auf, die in einer Ausführung wenigstens temporär signaltechnisch miteinander gekoppelt bzw. hierzu eingerichtet sind, insbesondere zur Überwachung eines Höchstabstandes zwischen den beiden Teilen, und/oder jeweils ein eigenes Außengehäuse aufweisen, insbesondere einen Teil, der personenfest bzw. hierzu vorgesehen bzw. eingerichtet ist und daher als Personenteil bezeichnet wird, und/oder einen Teil zum Ermittelt einer Position der Vorrichtung, der daher als Positionsteil bezeichnet wird. Hierdurch können verschiedene Funktionalitäten der Vorrichtung durch ihre Teile implementiert und dadurch optimiert werden.

In einer Ausführung gestattet die Zugangskontrolle nur Personen, die eine solche Vorrichtung mit sich führen, Zugang zu dem Anlagenbereich bzw. sperrt einen Zugang zu dem Anlagenbereich, sofern eine Person keine solche Vorrichtung mit sich führt, insbesondere bei Aufenthalt einer Person in einem Zugangsbereich, insbesondere einer Schleuse, keine solche Vorrichtung innerhalb des Zugangsbereichs vorhanden ist bzw. erfasst wird.

In einer Ausführung ist die Vorrichtung personenspezifisch bzw. ist bzw. wird eine Vorrichtung jeweils genau einer Person zugeordnet und/oder einer Person jeweils genau eine Vorrichtung zugeordnet, beispielsweise durch entsprechende Kodierung, restriktive Ausgabe von Vorrichtungen, unverlierbarer Befestigung an der jeweiligen Person oder dergleichen.

Hierdurch kann in einer Ausführung die Sicherheit weiter erhöht werden.

In einer Ausführung wird die Position eines Positionsmittels innerhalb des Anlagenbereichs, insbesondere drahtlos, insbesondere optisch, funkbasiert oder dergleichen, erfasst bzw. ermittelt und die Position der die Vorrichtung tragenden Person auf Basis dieses Positionsmittels bzw. dieser erfassten bzw. ermittelten Position des Positionsmittels erfasst bzw. ermittelt.

Das Positionsmittel ist in einer Ausführung ein Mittel der einteiligen Vorrichtung, in einer anderen Ausführung stattdessen ein (Positions)Teil der mehrteiligen Vorrichtung, in einer weiteren anderen Ausführung stattdessen ein weiteres, separates Teil zusätzlich zu der (ein- oder mehrteiligen) Vorrichtung. Mit anderen Worten kann die von der Person tragbare, insbesondere getragene, insbesondere mitgeführte, Vorrichtung, zum Erfassen einer Position der Person bzw. auf deren Basis die Position der Person ermittelt wird, in einer Ausführung das Positionsmittel aufweisen oder separat von diesem ausgebildet sein.

In einer Ausführung sendet das (aktive) Positionsmittel Signale an einen oder mehrere, insbesondere umgebungsfeste, Empfänger aus, wobei in einer Ausführung durch Triangulation oder dergleichen die Position des Positionsmittels innerhalb des Anlagenbereichs ermittelt werden kann.

Gleichermaßen kann das (insofern passive) Positionsmittel in einer Ausführung auch Signale von einem oder mehreren, insbesondere umgebungsfesten, Sender empfangen und hierzu, insbesondere in an sich beispielsweise von dem Global Positioning System bekannter Weise, seine Position innerhalb des Anlagenbereichs ermitteln und diese in einer Weiterbildung dann seinerseits an einen Empfänger weitergeben.

Wenn in einer Ausführung das Positionsmittel ein Mittel einer einteiligen Vorrichtung oder ein (Positions)Teil einer mehrteiligen Vorrichtung ist, so bestimmt in einer Ausführung dessen (ermittelte) Position innerhalb des Anlagenbereichs die Position der die Vorrichtung tragenden Person innerhalb des Anlagenbereichs bzw. wird in einer Ausführung die Position der die Vorrichtung tragenden Person innerhalb des Anlagenbereichs auf Basis des Positionsmittels der Vorrichtung bzw. dessen ermittelter Position innerhalb des Anlagenbereichs ermittelt, insbesondere können die Positionen von Positionsmittel und Person identisch sein oder eine vorgegeben, insbesondere konstante, Relation aufweisen.

Wenn in einer Ausführung das Positionsmittel ein (Positions)Teil einer mehrteiligen Vorrichtung oder ein zu der (ein- oder mehrteiligen) Vorrichtung separates weiteres, zusätzlich Teil ist, so wird in einer Ausführung ein Höchstabstand zwischen dem Positionsmittel und einem, insbesondere personenfesten, (Personen)Teil der Vorrichtung oder der, insbesondere personenfesten, Vorrichtung überwacht und die Position der die Vorrichtung tragenden Person innerhalb des Anlagenbereichs auf Basis der Position des Positionsmittels innerhalb des Anlagenbereichs und des überwachten Höchstabstands ermittelt, insbesondere kann in einer Ausführung, solange der überwachte Höchstabstand eingehalten wird, die Position des Positionsmittels innerhalb des Anlagenbereichs die Position der die Vorrichtung tragenden Person innerhalb des Anlagenbereichs bestimmen, insbesondere können die Positionen von Positionsmittel und Person identisch sein oder eine vorgegeben, insbesondere konstante, Relation aufweisen. Entsprechend kann die von der Person tragbare, insbesondere getragene, insbesondere mitgeführte, Vorrichtung, zum Erfassen einer Position der Person bzw. auf deren Basis die Position der Person ermittelt wird, in einer Ausführung das Positionsmittel aufweisen oder separat von diesem ausgebildet sein, wobei aufgrund der Überwachung des Höchstabstandes die Position der Person (auch) auf Basis dieser von der Person tragbaren Vorrichtung ermittelt bzw. die tragbare Vorrichtung (wenigstens indirekt) zum Erfassen der Position der Person verwendet wird.

In einer Ausführung ist wenigstens ein Referenzsender und/oder -empfänger innerhalb des Anlagenbereichs angeordnet, mittels dem die Funktionsfähigkeit der und/oder Signalübertragung zwischen Positionsmittel(n) und Sender(n) bzw. Empfänger(n) überprüft wird.

In einer Ausführung ist bzw. wird die Vorrichtung oder ein (Personen)Teil der mehrteiligen Vorrichtung an der Person, insbesondere lösbar, befestigt bzw. dazu eingerichtet, in einer Ausführung weist sie bzw. er hierzu ein Armband, (Kleider)Clip, Ring, eine Klammer, (Umhänge)band oder dergleichen auf bzw. ist als "Wearable" ausgebildet bzw. dazu eingerichtet, passiv von der Person mitgeführt zu werden, insbesondere an deren Kleidung. In einer anderen Ausführung ist bzw. wird die Vorrichtung oder ein (Personen)Teil der mehrteiligen Vorrichtung von der Person handgeführt bzw. aktiv gehalten bzw. dazu eingerichtet, insbesondere als Handbediengerät zum Bedienen des Roboters oder zur, insbesondere lösbaren, Befestigung an einem Handbediengerät zum Bedienen des Roboters.

In einer Ausführung weist das Verfahren wenigstens einen der Schritte auf:
- Überwachen eines Höchstabstandes zwischen Vorrichtung, insbesondere einem (Personen)Teil der mehrteiligen Vorrichtung, und Person und/oder dem Positionsmittel und/oder einem Handbediengerät zum Bedienen des bzw. eines oder mehrerer Roboter(s) der Anlage; und/oder
- Überwachen einer Vitalfunktion, insbesondere eine Herzfrequenz, der Person mittels der Vorrichtung; und/oder
- Überwachen einer Höhe der Vorrichtung, insbesondere eines (Personen)Teils der mehrteiligen Vorrichtung, und/oder deren zeitliche Änderung.
   und den Schritt auf:
- Auslösen einer Sicherheitsreaktion auf Basis dieser Überwachung.

Entsprechend weist in einer Ausführung das Mittel zum Überwachen der Anlage:
- Mittel zum Überwachen eines Höchstabstandes zwischen Vorrichtung, insbesondere einem (Personen)Teil der mehrteiligen Vorrichtung, und Person und/oder dem Positionsmittel und/oder einem Handbediengerät zum Bedienen des bzw. eines oder mehrerer Roboter(s) der Anlage; und/oder
- Mittel zum Überwachen einer Vitalfunktion, insbesondere eine Herzfrequenz, der Person mittels der Vorrichtung; und/oder
- Mittel zum Überwachen einer Höhe der Vorrichtung, insbesondere eines (Personen)Teils der mehrteiligen Vorrichtung, und/oder deren zeitlichen Änderung.
   und:
- Mittel zum Auslösen einer Sicherheitsreaktion auf Basis dieser Überwachung auf.

Durch das Überwachen eines Höchstabstandes zwischen Person und Vorrichtung, insbesondere einem (Personen)Teil der mehrteiligen Vorrichtung, kann in einer Ausführung sichergestellt werden, dass die Vorrichtung bzw. deren (Personen)Teil nicht (unbeabsichtigt oder vorsätzlich) abgelegt und so die Position der Personen selber nicht mehr korrekt erfasst wird. Entsprechend beträgt in einer Ausführung der Höchstabstand höchstens 2 m, insbesondere höchstens 1 m, insbesondere 30 cm oder weniger.

In einer Ausführung überwacht das Verfahren bzw. Mitteln den Höchstabstand durch Überwachen eines (geschlossenen) Verschlusses der Vorrichtung, insbesondere des (Personen)Teils, die bzw. der nur bei geöffnetem Verschluss abnehmbar ausgestaltet ist, bzw. ist hierzu eingerichtet, wie dies beispielsweise von Lawinenverschüttetensuchgeräten oder dergleichen an sich bekannt ist.

Zusätzlich oder alternativ kann das Verfahren bzw. Mitteln in einer Ausführung den Höchstabstand durch Überwachen einer Vitalfunktion, insbesondere eine Herzfrequenz, der Person, mit auf den Höchstabstand begrenzter Reichweite, insbesondere durch kontaktierendes Überwachen der Vitalfunktion, wie es beispielsweise von Pulsmessern an stationären Cardiogeräten an sich bekannt ist, überwachen bzw. hierzu eingerichtet sein.

Durch das Auslösen einer Sicherheitsreaktion auf Basis einer Überwachung einer Vitalfunktion, insbesondere Herzfrequenz, der die Vorrichtung mitführenden Person kann in einer Ausführung zusätzlich oder alternativ zu der oben beschriebenen Überwachung des Höchstabstandes bzw. Detektion eines (unbeabsichtigten oder vorsätzlichen) Ablegens der Vorrichtung auch auf Notsituationen einer Person reagiert werden, insbesondere wenn diese sich alleine in der ansonsten personenfreien vollautomatisierten Anlage befindet.

In einer Ausführung weist die Vorrichtung eine Kontaktfläche, insbesondere einen Handgriff, auf, über den die Vitalfunktion, insbesondere Herzfrequenz, der diesen haltende Person überwacht wird.

Zusätzlich oder alternativ kann das Verfahren bzw. Mitteln in einer Ausführung einen Höchstabstand zwischen der Vorrichtung, insbesondere einem (Personen)Teil der mehrteiligen Vorrichtung, und dem Positionsmittel, insbesondere einem (Positions)Teil der mehrteiligen Vorrichtung oder einem zu der Vorrichtung separaten, weiteren Positionsmittel, und/oder einem Handbediengerät zum Bedienen des Roboters, überwachen und die Sicherheitsreaktion auf Basis dieser Überwachung auslösen bzw. hierzu eingerichtet sein. In einer Ausführung kann das Handbediengerät insbesondere das Positionsmittel aufweisen.

Hierdurch kann in einer Ausführung sichergestellt werden, dass der Träger der Vorrichtung ein Handbediengerät, insbesondere mit einer Notauseinrichtung, in Griffweite hat und/oder das Positionsmittel nicht zu weit von dem Träger der Vorrichtung bzw. des (Personen)Teils entfernt und somit seine Position mittels des Positionsmittels korrekt ermittelbar ist.

Eine niedrige Höhe, insbesondere Bodennähe, der, insbesondere personenfesten, Vorrichtung, insbesondere eines (Personen)Teils dieser, insbesondere für eine vorgegebene Mindestzeit, und/oder eine rascher Höhenverlust der Vorrichtung können ein ungeplantes Ereignis, insbesondere einen Unfall der Person, indizieren. Entsprechend kann in einer Ausführung durch Überwachen einer Höhe der, insbesondere personenfesten, Vorrichtung, insbesondere eines (Personen)Teils dieser, und/oder einer zeitlichen Änderung einer Höhe der, insbesondere personenfesten, Vorrichtung, insbesondere eines (Personen)Teils dieser, und ein Auslösen einer Sicherheitsreaktion auf Basis dieser Überwachung auf Notsituationen einer Person reagiert werden, insbesondere wenn diese sich alleine in der ansonsten personenfreien vollautomatisierten Anlage befindet.

In einer Ausführung weist das Überführen in einen sicheren Zustand den Schritt auf: Reduzieren einer Geschwindigkeit des Roboters, insbesondere in Abhängigkeit von einer Position und/oder Geschwindigkeit wenigstens einer Person innerhalb des Abstandsbereichs. Zusätzlich oder alternativ weist in einer Ausführung das Auslösen einer Sicherheitsreaktion den Schritt auf: Reduzieren einer Geschwindigkeit des Roboters in Abhängigkeit von einer Position und/oder Geschwindigkeit wenigstens einer Person innerhalb des Abstandsbereichs.

Entsprechend weist in einer Ausführung das Mittel zum Überführen in einen sicheren Zustand auf: Mittel zum Reduzieren einer Geschwindigkeit des Roboters, insbesondere in Abhängigkeit von einer Position und/oder Geschwindigkeit wenigstens einer Person innerhalb des Abstandsbereichs. Zusätzlich oder alternativ weist in einer Ausführung das Mittel zum Auslösen einer Sicherheitsreaktion auf: Mittel zum Reduzieren einer Geschwindigkeit des Roboters in Abhängigkeit von einer Position und/oder Geschwindigkeit wenigstens einer Person innerhalb des Abstandsbereichs.

In einer Ausführung wird eine Geschwindigkeit des Roboters stärker reduziert, falls eine Geschwindigkeit der Person einen vorgegebenen Maximalwert übersteigt, der insbesondere auch, wenigstens im Wesentlichen, gleich Null sein kann. Insbesondere kann somit der Roboter sich mit größerer bzw. weniger reduzierter Geschwindigkeit bewegen, solange eine Person in seinem Abstands- oder Sicherheitsbereich steht, und mit demgegenüber stärker reduzierter bzw. kleinerer Geschwindigkeit bewegen oder stehen(bleiben), falls sich eine Person in seinem Abstands- oder Sicherheitsbereich (von der Stelle) bewegt.

In einer Ausführung reduziert das Verfahren bzw. Mittel die Geschwindigkeit des Roboters stärker, wenn sich wenigstens eine Person in seinem Sicherheitsbereich befindet, und demgegenüber weniger, wenn sich nur wenigstens eine Person in seinem Abstandsbereich befindet, insbesondere am stärksten, insbesondere auf Null, wenn sich wenigstens eine Person in seinem Sicherheitsbereich (von der Stelle) bewegt, gleich oder weniger stark, falls sich eine oder mehrere Personen in seinem Sicherheitsbereich befindet, die alle stehen, gleich oder weniger stark, wenn sich wenigstens eine Person in seinem Abstandsbereich (von der Stelle) bewegt, jedoch keine Person sich in seinem Sicherheitsbereich befindet, und/oder gleich oder weniger stark, falls sich eine oder mehrere Personen in seinem Abstandsbereich befindet, die alle stehen, und keine Person sich in seinem Sicherheitsbereich befindet, bzw. ist hierzu eingerichtet.

Zusätzlich oder alternativ modifiziert in einer Ausführung das Verfahren bzw. Mittel auf Basis einer Betätigung einer Zustimmeinrichtung, insbesondere der Vorrichtung, den sicheren Zustand bzw. ist hierzu eingerichtet. In einer Ausführung reduziert es eine Geschwindigkeit stärker, sofern die Zustimmeinrichtung nicht betätigt ist, und demgegenüber weniger, sofern die Zustimmeinrichtung betätigt ist, bzw. ist hierzu eingerichtet.

Zusätzlich oder alternativ modifiziert in einer Ausführung das Verfahren bzw. Mittel auf Basis einer Betätigung einer, insbesondere der, Zustimmeinrichtung, insbesondere der Vorrichtung, die Sicherheitsreaktion, die in einer Ausführung allgemein ein Reduzieren einer Geschwindigkeit des Roboters umfassen, insbesondere sein, kann, bzw. ist hierzu eingerichtet. In einer Ausführung reduziert es eine Geschwindigkeit stärker, sofern die Zustimmeinrichtung nicht betätigt ist, und demgegenüber weniger, sofern die Zustimmeinrichtung betätigt ist, bzw. ist hierzu eingerichtet.

Eine vorstehend erläuterte differenzierten Reduzierungen der Geschwindigkeit auf Basis einer Personengeschwindigkeit über oder unter einem vorgegebenen Maximalwert in dem Abstands- und/oder Sicherheitsbereich und einer Betätigung einer Zustimmeinrichtung können alleine oder vorzugsweise in Kombination miteinander vorgesehen sein.

Insbesondere reduziert in einer Ausführung das Verfahren bzw. Mittel die Geschwindigkeit des Roboters am stärksten, insbesondere auf Null, wenn sich wenigstens eine Person in seinem Sicherheitsbereich befindet, ohne die Zustimmeinrichtung zu betätigen, gleich oder weniger stark, falls sich wenigstens eine Person in seinem Sicherheitsbereich (von der Stelle) bewegt und ihre Zustimmeinrichtung betätigt, gleich oder weniger stark, wenn sich eine oder mehrere Personen in seinem Sicherheitsbereich befindet, die alle stehen und alle oder wenigstens eine ihre Zustimmeinrichtung(en) betätigen bzw. betätigt, gleich oder weniger stark, wenn sich wenigstens eine Person in seinem Abstandsbereich befindet, ohne dass eine oder aller ihre Zustimmeinrichtung betätigt bzw. betätigen, jedoch keine Person sich in seinem Sicherheitsbereich befindet, und/oder gleich oder weniger stark, falls sich eine oder mehrere Personen in seinem Abstandsbereich befindet, die alle stehen, und alle oder wenigstens eine ihre Zustimmeinrichtung(en) betätigen bzw. betätigt, und keine Person sich in seinem Sicherheitsbereich befindet, bzw. ist hierzu eingerichtet.

In einer Ausführung umfasst das Überführen in einen sicheren Zustand und/oder das Auslösen einer Sicherheitsreaktion (jeweils) eine Reduzierung einer Geschwindigkeit des Roboters und das Modifizieren des sicheren Zustands und/oder der Sicherheitsreaktion auf Basis einer Betätigung einer Zustimmeinrichtung (jeweils) eine, insbesondere schrittweise, Vergrößerung dieser reduzierten Geschwindigkeit, die in einer Ausführung nur möglich bzw. zulässig ist, falls eine Geschwindigkeit wenigstens einer oder aller Personen in dem Abstands- und/oder Sicherheitsbereich des entsprechenden Roboter einen vorgegebenen Höchstwert nicht überschreiten, insbesondere nur, falls aller Personen in dem Abstands- und/oder Sicherheitsbereich des entsprechenden Roboter stehen.

Allgemein modifiziert das Verfahren bzw. Mittel in einer Ausführung einen sicheren Zustand und/oder eine Sicherheitsreaktion, insbesondere eine Reduzierung einer Geschwindigkeit des Roboters, auf Basis einer Betätigung einer Zustimmeinrichtung, insbesondere der Vorrichtung, und/oder einer Position wenigstens einer Person innerhalb des Abstandsbereichs und/oder wenigstens einer Person innerhalb des Sicherheitsbereichs und/oder einer Geschwindigkeit, insbesondere Geh- bzw. Fortbewegungsgeschwindigkeit, einer oder aller Person innerhalb des Abstandsbereichs und/oder einer oder aller Person innerhalb des Sicherheitsbereichs, insbesondere in der vorstehend erläuterten Weise durch Erhöhen der reduzierten Geschwindigkeit aufgrund einer Betätigung der Zustimmeinrichtung, insbesondere nur bei stehenden Personen, bzw. ist hierzu eingerichtet.

In einer Ausführung kann das Überführen in einen sicheren Zustand und/oder eine Sicherheitsreaktion eine Ausweichbewegung des Roboters, insbesondere von der Person weg, umfassen, insbesondere sein.

Zusätzlich oder alternativ kann eine Sicherheitsreaktion, insbesondere eine auf Basis einer Überwachung einer Vitalfunktion, insbesondere Herzfrequenz, und/oder einer Höhe der Vorrichtung und/oder deren zeitlichen Änderung ausgelöste Sicherheitsreaktion, ein Alarmsignal, insbesondere ab bzw. in eine(r) Rettungs(leit)stelle umfassen, insbesondere sein. Vorteilhaft kann in einer Ausführung eine Rettung auf Basis der ermittelten Position der Vorrichtung zu der entsprechenden Person navigiert werden.

In einer Ausführung wird durch die Betätigung einer Notaus-Einrichtung der Vorrichtung eine Sicherheitsreaktion, insbesondere ein Notaus, ausgelöst. Hierdurch kann in einer Ausführung eine Personensicherheit weiter erhöht werden.

Zusätzlich oder alternativ kann, insbesondere an der Vorrichtung, eine Deaktivierungseinrichtung zum Unterbinden des Überführens in einen sicheren Zustand und/oder des Auslösens einer Sicherheitsreaktion vorgesehen sein, durch den beispielsweise trotz längerem Aufenthalt in Bodennähe bewusst eine Alarmierung einer Rettung unterbunden werden kann. Die Deaktivierungseinrichtung kann insbesondere mit der Zustimmeinrichtung gekoppelt, insbesondere identisch sein.

In einer Ausführung weist das Verfahren den Schritt auf: Anzeigen, insbesondere optisches Anzeigen, des Abstandsbereichs und/oder einer Anwesenheit wenigstens einer Person innerhalb des Abstandsbereichs und/oder eines sicheren Zustands. Entsprechend weist in einer Ausführung das Mittel zum Überwachen der Anlage auf: Mittel zum Anzeigen, insbesondere optischen Anzeigen, des Abstandsbereichs und/oder einer Anwesenheit wenigstens einer Person innerhalb des Abstandsbereichs und/oder eines sicheren Zustands.

In einer Ausführung weist das Mittel zum optischen Anzeigen des Abstandsbereichs eine Brille auf, auf der der virtuelle Abstandsbereich angezeigt wird.

Hierdurch kann in einer Ausführung eine Navigation innerhalb einer "Dark Factory" verbessert werden-
Zusätzlich oder alternativ weist in einer Ausführung das Mittel zum, insbesondere optischen, Anzeigen des Abstandsbereichs und/oder eines sicheren Zustands eines Roboters ein Leuchtmittel an dem Roboter und/oder einen Lautsprecher zum Ausgeben eines akustischen Warnsignals auf. In einer Ausführung gibt das Mittel bzw. Verfahren ein, insbesondere optisches und/oder akustisches, Signal aus, aktiviert insbesondere das Leuchtmittel, falls eine Person den Abstandsbereich des Roboters betritt und/oder der Roboter einen sicheren Zustand aufweist, bzw. ist hierzu eingerichtet.

Hierdurch kann eine, insbesondere störungsfreie, Bewegung von Personen (von der Stelle) innerhalb der Anlage erleichtert werden.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Anlage betreiben bzw. überwachen kann.

In einer Ausführung werden ein oder mehrere, insbesondere alle, Schritte des Verfahrens vollständig oder teilweise automatisiert durchgeführt, insbesondere durch das bzw. die Mittel.

Weitere Vorteile und Merkmale ergeben sich aus den Unteransprüchen und den Ausführungsbeispielen. Hierzu zeigt, teilweise schematisiert,:
- Fig. 1:: ein System mit einer Anlage mit zwei Robotern nach einer Ausführung der vorliegenden Erfindung; und
- Fig. 2:: ein Verfahren zum Überwachen der Anlage nach einer Ausführung der vorliegenden Erfindung.

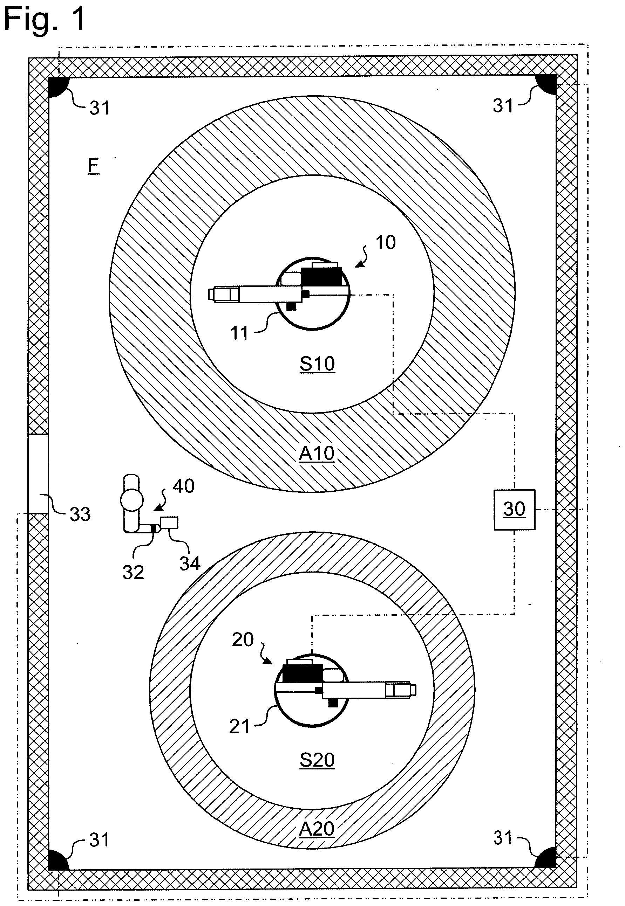

Fig. 1 zeigt ein System mit einer Anlage nach einer Ausführung der vorliegenden Erfindung.

Die Anlage weist exemplarisch zwei Roboter 10, 20 auf, für die jeweils ein Sicherheitsbereich S10 bzw. S20 und ein dieser umgebende Abstandsbereich A10 bzw. A20 vorgegeben wird bzw. ist. Der Sicherheitsbereich entspricht beispielsweise einem maximalen Arbeitsraum des jeweiligen Roboters.

Eine Sicherheitssteuerung 30 ist einerseits mit den zwei Robotern 10, 20 und andererseits mit Empfängern 31 signalverbunden, die mittels Triangulation die Position von tragbaren Armbändern 32 und damit von Personen 40 mit diesen Armbändern 32 innerhalb eines vorgegebenen Anlagenbereichs F erfassen. In einer Abwandlung kann die Sicherheitssteuerung 30 zusätzlich oder alternativ drahtlos mit den tragbaren Armbändern 32 signalverbunden sein bzw. kommunizieren und hieraus deren Position innerhalb des Anlagenbereichs ermitteln.

Der Anlagenbereich F ist zugangsgesichert und weist eine Zugangskontrolle und - vereinzelung in Form einer Schleuse 33 auf, die ebenfalls mit der Sicherheitssteuerung 30 signalverbunden ist.

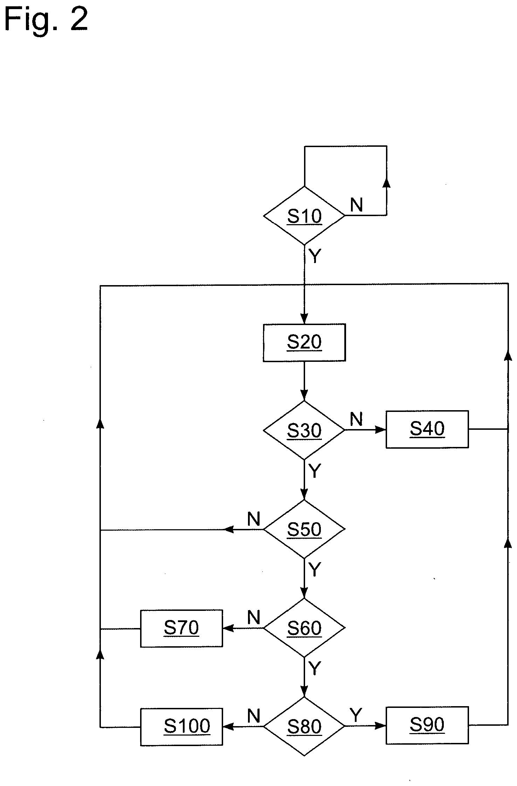

Fig. 2 zeigt ein durch das System, insbesondere die Sicherheitssteuerung 30, durchgeführtes Verfahren zum Überwachen der Anlage nach einer Ausführung der vorliegenden Erfindung.

In einem Schritt S10 wird an der Schleuse 33 geprüft, ob eine Person innerhalb der Schleuse eine der Armbänder 32 zur Positionsbestimmung trägt. Ist dies nicht der Fall (S10: "N"), verwehrt das Verfahren bzw. System den Zugang.

(Nur) Personen 40, die ein solches Armband zur Positionsbestimmung tragen, dürfen den Anlagenbereich F betreten (S10: "Y").

In einem Schritt S20 werden mittels der Empfänger 31 ständig, insbesondere zyklisch, die Positionen aller Personen innerhalb des Anlagenbereichs F erfasst.

In einer Abwandlung können auch Sender 31 vorgesehen sein, anhand deren Signale die Armbänder 32 selber ihre Position ermitteln und an die Sicherheitssteuerung 30 übermitteln.

In einem Schritt S30 wird für alle Armbänder 32 innerhalb des Anlagenbereichs F ständig oder zyklisch eine Herzfrequenz des jeweiligen Trägers erfasst, die die Armbänder 32 kontaktierend messen, und geprüft, ob diese Herzfrequenz über einem vorgegebenen Mindestwert und unter einem vorgegebenen Höchstwert liegt (S30: "Y") oder nicht (S30: "N").

Liegt die kontaktierend gemessene Herzfrequenz nicht über dem Mindestwert, so kann dies zum einen daran liegen, dass die Person das Armband unzulässig entfernt hat (kontaktierend gemessene Herzfrequenz gleich Null), so dass ein vorgegebener Höchstabstand zwischen Armband und Person überschritten ist (S30: "N").

Gleichermaßen kann eine Notsituation der Person, beispielsweise Bewusstlosigkeit, Herzstillstand, Schock oder dergleichen, dazu führen, dass die Herzfrequenz über dem Höchstwert oder unter dem Mindestwert liegt (S30: "Y").

In diesen Fällen wird in einem Schritt S40 ein Notaus der Roboter 10, 20 ausgelöst und eine Rettungsleitstelle benachrichtigt.

Dies geschieht in einer Abwandlung auch, falls über eine vorgegebene Mindestdauer hinweg eine Bodenhöhe bzw. das Unterschreiten einer vorgegebenen Mindesthöhe eines Armbands oder ein rapider Höhenverlust eines Armbands erfasst wird, da dies auf eine Bewusstlosigkeit, einen Sturz oder dergleichen hindeutet.

Eine solche Sicherheitsreaktion kann in einer Abwandlung durch Betätigen einer Zustimmeinrichtung an dem Armband 32 unterbunden werden, beispielsweise, weil die Person sich zu Inspektionszwecken länger in Bodennähe aufhalten muss.

In einer Abwandlung weist das Armband 32 einen von der Sicherheitssteuerung 30 überwachten Verschluss auf oder es ist anstelle eines Armbands ein (Mini)Sender 32 vorgesehen, der verliersicher an der Kleidung der Person befestigt ist, beispielsweise einen von der Sicherheitssteuerung 30 überwachten Verschluss aufweist, wobei in einer Weiterbildung das Armband bzw. der Minisender 32 höchstens einen vorgebebenen Abstand zu einem Empfänger aufweisen darf, der an einem Handbediengerät 34 zum Bedienen der Roboter 10, 20 angeordnet ist.

Übersteigt der Abstand zwischen Minisender 32 und Handbediengerät 34 den Höchstabstand oder löst die Person den Verschluss, so wird in der Abwandlung in Schritt S40 ein Notaus der Roboter 10, 20 ausgelöst.

Sofern überwachungsmäßig sichergestellt ist, dass die Positionen aller Personen 40 innerhalb des Anlagenbereichs F mittels der tragbaren Vorrichtung(en) 32 erfasst werden (und die Personen gegebenenfalls zulässige Vitalfunktionen aufweisen), fährt das Verfahren bzw. System mit Schritt S50 fort.

In diesem prüft das Verfahren bzw. System, ob sich wenigstens eine Person innerhalb eines Abstandsbereichs A10, A20 eines Roboters 10, 20 der Anlage befindet.

Ist dies nicht der Fall (S50: "N"), kehrt das Verfahren bzw. System zu Schritt S20 zurück.

Andernfalls (S50: "Y") prüft es in einem Schritt S60, ob sich wenigstens eine Person innerhalb eines Sicherheitsbereichs S10, S20 eines Roboters 10, 20 der Anlage befindet.

Ist dies nicht der Fall (S60: "N"), d.h. befindet sich wenigstens eine Person innerhalb eines Abstandsbereichs A10, A20 eines Roboters 10, 20, jedoch keine Sicherheitsbereichs S10, S20 Person innerhalb eines Abstandsbereichs A10, A20 dieser Roboter, überführt das Verfahren bzw. System in einem Schritt S70 den entsprechenden Roboter, in dessen Abstandsbereichs sich wenigstens eine Person befindet, in einen sicheren Zustand, und kehrt anschließend zu Schritt S20 zurück.

Dieser sichere Zustand kann in einer Ausführung eine reduzierte Geschwindigkeit des entsprechenden Roboters umfassen, die in einer Weiterbildung vom Abstand der (nächsten) Person zu dem jeweiligen Roboter und/oder davon abhängen kann, ob sich die Person(en) im Abstandsbereich bewegen oder stehen und/oder eine oder alle (jeweils) Zustimmeinrichtung an der Vorrichtung 32 oder dem Handbediengerät 43 betätigen.

So wird beispielsweise in einer Ausführung die Geschwindigkeit des entsprechenden Roboters auf 25% einer normalen Prozessgeschwindigkeit reduziert, falls wenigstens eine Person im Abstandsbereich ihre Zustimmeinrichtung betätigt oder falls alle Personen im Abstandsbereich ihre Zustimmeinrichtungen betätigen.

Ohne eine entsprechende Betätigung der Zustimmeinrichtung(en) wird die Geschwindigkeit des entsprechenden Roboters auf 5% der normalen Prozessgeschwindigkeit reduziert.

In einer Abwandlung wird die Geschwindigkeit des entsprechenden Roboters stets auf 5% der normalen Prozessgeschwindigkeit reduziert, wobei eine Person durch Betätigung der Zustimmeinrichtung diese reduzierte Geschwindigkeit auf 25% der normalen Prozessgeschwindigkeit erhöhen kann, falls alle Personen im Abstandsbereich stehen.

Zusätzlich oder alternativ zu einer solchen Geschwindigkeitsreduzierung wird in einer Ausführung in Schritt S70 ein nächster vorgegebener Unterbrechungspunkt in einem Arbeitsprozess bzw. Programmablauf des entsprechenden Roboters angefahren und der Arbeitsprozess in diesem Punkt unterbrochen, insbesondere der Roboter sicher stillgesetzt und sein Werkzeug sicher deaktiviert. Auch dies stellt somit ein Überführen des entsprechenden Roboters in einen sicheren Zustand dar.

Die Unterbrechungspunkte sind prozessbedingt so vorgegeben, dass bestimmte Arbeitsschritte wie das Abfahren einer Kleberaupe, Schweiß- oder Lackierbahn normal beendet werden können, indem sie nur nach solchen Arbeitsschritten vorgegeben sind.

In diesem Fall fungiert der Abstandsbereich A10 bzw. A20 als zeitliche Pufferzone: sobald wenigstens eine Person 40 den entsprechenden Abstandsbereich betritt, beendet der Roboter noch den aktuellen Arbeitsschritt und gegebenenfalls weitere Arbeitsschritte, bis er den nächsten Unterbrechungspunkt im Programmablauf erreicht. In diesem unterbricht das Verfahren bzw. System den Arbeitsprozess.

Die Abstandsbereiche A10, A20 sind entsprechend in Abhängigkeit von einer aktuellen Arbeitszeit des jeweiligen Roboters 10, 20 bis zum nächsten Unterbrechungspunkt oder einer maximalen Arbeitszeit zwischen zwei Unterbrechungspunkten und einer aktuellen Geschwindigkeit oder vorgegebenen Höchstgeschwindigkeit von Personen 40 im Anlagenbereich F vorgegeben.

So beträgt beispielsweise die Arbeitszeit zwischen zwei aufeinanderfolgenden Unterbrechungspunkten im Programm(ablauf) des Roboters 10 maximale 10 s. Unter der Annahme, dass Personen sich maximal mit 3,6 m/s von der Stelle bewegen, wird der Abstandsbereich A10 fest derart vorgegeben, dass ein minimaler Abstand seiner Außengrenze zum Sicherheitsbereich bzw. Arbeitsraum S10 des Roboters 10 (bzw. dessen Außengrenze) wenigstens 3,6 m/s · 10 s = 36 m beträgt.

Ebenfalls rein exemplarisch beträgt die aktuelle (Rest)Arbeitszeit des Roboters 20 zum nächsten Unterbrechungspunkten in seinem Programm(ablauf) 5 s. Die aus der zeitlichen Abfolge der erfassten Positionen der Person 40 ermittelte aktuelle Gehgeschwindigkeit der Person 40 auf den Roboter 20 zu beträgt zum Beispiel 1 m/s.

Daher wird der Abstandsbereich A20 variabel derart vorgegeben, dass ein minimaler Abstand seiner Außengrenze zum Sicherheitsbereich bzw. Arbeitsraum S20 des Roboters 20 (bzw. dessen Außengrenze) aktuell wenigstens 1 m/s _{·} 5 s = 5 m beträgt.

Auf diese Weise können sich Personen 40 vorteilhaft im Anlagenbereich F von der Stelle bewegen. Kommen sie dabei in die Nähe eines der Roboter 10, 20, unterbricht dieser seinen Arbeitsprozess an einem hierfür geeigneten, in seinem Programm(ablauf) vorab vorgegebenen Unterbrechungsunkt, so dass ein harter Notaus möglichst vermieden wird.

In einer Ausführung kann die Person 40 eine Brille tragen, in der die Abstandsund/oder Sicherheitsbereiche visualisiert werden. Zusätzlich oder alternativ können Leuchtmittel an den Robotern 10, 20 in Schritt S70 aktiviert werden und so anzeigen, dass der entsprechende Roboter seine Geschwindigkeit reduziert (hat) bzw. seinen Unterbrechungspunkt anfährt und/oder angefahren hat. Auf diese Weise kann die Person insbesondere abwarten, bis der Roboter am Unterbrechungspunkt sicher stillgesetzt worden ist.

Beispielsweise kann ein Leuchtring 11 bzw. 21 an einem Roboter, insbesondere in einer ersten Farbe, aufleuchten, falls der entsprechende Abstandsbereich A10 bzw. A20 betreten wurde und der Roboter den Unterbrechungspunkt anfährt, und/oder, insbesondere in einer zweiten Farbe, aufleuchten, falls der Roboter in dem Unterbrechungspunkt sicher stillgesetzt worden ist.

Daher sind in einer Ausführung die (Arbeitsräume der) Roboter 10, 20 nicht durch Zäune oder dergleichen getrennt bzw. -sichert.

Falls sich wenigstens eine Person im Sicherheitsbereich eines Roboters aufhält (S60: "Y"), fährt das Verfahren bzw. System mit Schritt S80 fort.

In diesem prüft es in einer Ausführung, ob die Person eine Zustimmeinrichtung an Armband 32 oder Handbediengerät 34 betätigt oder nicht.

Ist dies der Fall (S80: "Y"), reduziert es in einem Schritt S90 die Geschwindigkeit des entsprechenden Roboters stärker. Dabei reduziert es die Geschwindigkeit beispielsweise auf 15% seiner normalen Prozessgeschwindigkeit, sofern die Person in dem Sicherheitsbereich steht, und demgegenüber noch stärker, beispielsweise auf 5% der normalen Prozessgeschwindigkeit, sofern die Person sich in dem Sicherheitsbereich von der Stelle bewegt.

Betätigt die Person im Sicherheitsbereich die Zustimmeinrichtung nicht (S80: "N"), setzt das Verfahren bzw. System den entsprechenden Roboter in einem Schritt S100 sicher still und kehrt anschließend zu Schritt S20 zurück.

In einer Abwandlung, insbesondere einer Ausführung, in der in Schritt S70 ein Unterbrechen des Arbeitsprozesses an vorgegebenen Unterbrechungspunkten vorgesehen ist bzw. durchgeführt wird, prüft das Verfahren bzw. System in Schritt S80 einen sicheren Zustand, in den der Roboter in S70 überführt worden ist, insbesondere, ob der entsprechende Arbeitsprozess sicher unterbrochen ist, insbesondere der entsprechende Roboter sicher stillsteht und sein Werkzeug sicher deaktiviert ist.

Solange dies der Fall ist (S80: "Y"), kann sich die Person im Sicherheitsbereich des entsprechenden Roboters aufhalten (S90).

Ist dies jedoch nicht der Fall (S80: "N"), erfasst beispielsweise die Sicherheitssteuerung 30 eine Bewegung des Roboters, ein aktives Werkzeug oder dergleichen, führt sie in Schritt S100 einen Notaus des entsprechenden Roboters durch.

Durch Verlassen des entsprechenden Abstandsbereichs oder eine entsprechende Bedienereingabe an Armband 32 oder Handbediengerät 34 (S50: "N") kann die Person eine Fortsetzung des unterbrochenen Arbeitsprozesses initiieren, insbesondere ein Ausführen eines nächsten Arbeitsschrittes durch den Roboter, dessen Antriebsenergieversorgung in Schritt S70, S90 vorzugsweise nicht unterbrochen wurde.

Obwohl in der vorhergehenden Beschreibung exemplarische Ausführungen erläutert wurden, sei darauf hingewiesen, dass eine Vielzahl von Abwandlungen möglich ist.

So kann beispielsweise statt eines Notaus in Schritt S100 auch ein Umschalten in eine Nachgiebigkeitsregelung oder dergleichen durchgeführt werden.

In einer Abwandlung ermitteln die Empfänger 31 die Position(en) von Handbediengeräten 34 bzw. Positionsmitteln dieser Handbediengeräten 34 innerhalb des Anlagenbereichs F oder ermitteln die Handbediengeräte 34 bzw. Positionsmittel dieser Handbediengeräten 34 auf Basis der Signale der Sender 31 ihre Position(en) innerhalb des Anlagenbereichs F und übermitteln diese an die Sicherheitssteuerung 30. Zusätzlich wird wiederum ein Höchstabstand zwischen Handbediengerät 34 und diesem zugeordneten Armband bzw. Minisender 32 überwacht. Solange dieser Höchstabstand nicht überschritten ist, kann die Position des Handgeräts 34 als Position der dieses tragenden Person ermittelt werden. Hierdurch können die Armbänder bzw. Minisender 32 vereinfacht werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10; 20: Roboter
- 11; 21: Leuchtring
- 30: Sicherheitssteuerung
- 31: Sender/Empfänger
- 32: Armband/Minisender (tragbare Vorrichtung)
- 33: Schleuse
- 34: Handbedeingerät
- 40: Person

- A10; A20: Abstandsbereich
- F: Anlagenbereich
- S10; S20: Sicherheitsbereich

## Patentansprüche

1. Verfahren zum Überwachen einer Anlage mit wenigstens einem Roboter, insbesondere mehreren Robotern (10, 20), mit den Schritten:
- Überwachen (S50) eines Abstandsbereichs (A10; A20) wenigstens eines Roboters (10, 20) der Anlage; und
- Überführen (S70) dieses Roboters in einen sicheren Zustand auf Basis einer Erfassung (S20) einer Position wenigstens einer Person (40) innerhalb dieses Abstandsbereichs, **gekennzeichnet durch** folgende Schritte:
- Durchführen (S70) eines Arbeitsprozesses des Roboters bis zu einem, insbesondere vorab und/oder prozessbedingt und/oder automatisch oder durch einen Bediener, vorgegebenen Unterbrechungspunkt; und
- Unterbrechen (S70) des Arbeitsprozesses, insbesondere Stillsetzten des Roboters, insbesondere ohne Unterbrechung seiner Energieversorgung, und/oder Deaktivieren wenigstens eines, insbesondere robotergeführten, Werkzeugs, an diesem Unterbrechungspunkt,
- wobei der Abstandsbereich auf Basis einer Arbeitszeit bis zu einem Unterbrechungspunkt, insbesondere einer maximalen Arbeitszeit zwischen zwei Unterbrechungspunkten und/oder einer Arbeitszeit bis zu einem nächsten Unterbrechungspunkt in dem Arbeitsprozess vorgegeben ist.

2. Verfahren nach einem der beiden vorhergehenden Ansprüche, **gekennzeichnet durch** den Schritt:
- Fortsetzen des unterbrochenen Arbeitsprozesses, insbesondere Bewegen des Roboters und/oder Aktivieren des Werkzeugs, auf Basis einer Erfassung einer Bedienereingabe und/oder einer Abwesenheit von Personen innerhalb des Abstandsbereichs (S50).

3. Verfahren nach einem der vorhergehenden Ansprüche, **gekennzeichnet durch** wenigstens einen der Schritte:
- Überwachen des sicheren Zustands (S80), insbesondere eines Stillstands des Roboters und/oder einer Inaktivität des Werkzeugs; und/oder
- Überwachen (S60) eines Sicherheitsbereichs des Roboters;
und den Schritt:
- Auslösen einer Sicherheitsreaktion, insbesondere Umschalten des Roboters in einen Mensch-Roboter-Kollaborationsmodus und/oder Reduzieren (S90) einer Geschwindigkeit des Roboters oder Durchführen (S100) eines Notaus des Roboters, auf Basis einer Erfassung einer Verletzung des sicheren Zustands und/oder einer Position wenigstens einer Person innerhalb des Sicherheitsbereichs.

4. Verfahren nach einem der vorhergehenden Ansprüche, **dadurch gekennzeichnet, dass** ein Anlagenbereich (F) vorgegeben ist und das Verfahren wenigstens einen der Schritte aufweist:
- Zugangskontrolle und/oder -vereinzelung (S10) zu dem vorgegebenen Anlagenbereich; und/oder
- Ermitteln (S20) von Positionen aller Personen (40) innerhalb des vorgegebenen Anlagenbereichs.

5. Verfahren nach einem der vorhergehenden Ansprüche, **dadurch gekennzeichnet, dass** eine Position wenigstens einer Person (40) auf Basis einer von dieser Person tragbaren Vorrichtung (32) und/oder einer ermittelten Position eines Positionsmittels (34) ermittelt wird.

6. Verfahren nach dem vorhergehenden Anspruch, **gekennzeichnet durch** wenigstens einen der Schritte:
- Überwachen (S30) eines Höchstabstandes zwischen Vorrichtung (32) und Person (40) und/oder dem Positionsmittel und/oder einem Handbediengerät (34); und/oder
- Überwachen (S30) einer Vitalfunktion, insbesondere eine Herzfrequenz, der Person (40) mittels der Vorrichtung (32); und/oder
- Überwachen (S30) einer Höhe der Vorrichtung (32) und/oder deren zeitliche Änderung;
und den Schritt:
- Auslösen (S40) einer Sicherheitsreaktion auf Basis dieser Überwachung.

7. Verfahren nach einem der vorhergehenden Ansprüche, **dadurch gekennzeichnet, dass**
das Überführen in einen sicheren Zustand den Schritt aufweist:
- Reduzieren (S70) einer Geschwindigkeit des Roboters, insbesondere in Abhängigkeit von einer Position und/oder Geschwindigkeit wenigstens einer Person innerhalb des Abstandsbereichs; und/oder
das Auslösen einer Sicherheitsreaktion den Schritt aufweist:
- Reduzieren (S90) einer Geschwindigkeit des Roboters in Abhängigkeit von einer Position und/oder Geschwindigkeit wenigstens einer Person innerhalb des Abstandsbereichs.

8. Verfahren nach einem der vorhergehenden Ansprüche, **dadurch gekennzeichnet, dass** auf Basis einer Betätigung einer Notaus- und/oder einer Zustimmeinrichtung, insbesondere der Vorrichtung (32), und/oder einer Position und/oder Geschwindigkeit wenigstens einer Person (40) innerhalb des Abstands- und/oder Sicherheitsbereichs der sichere Zustand modifiziert und/oder die Sicherheitsreaktion modifiziert und/oder ausgelöst wird.

9. Verfahren nach einem der vorhergehenden Ansprüche, **gekennzeichnet durch** den Schritt:
- Anzeigen, insbesondere optisches Anzeigen (S70), des Abstandsbereichs und/oder einer Anwesenheit wenigstens einer Person innerhalb des Abstandsbereichs und/oder eines sicheren Zustands.

10. Mittel (30 - 33) zum Überwachen einer Anlage mit wenigstens einem Roboter, insbesondere mehreren Robotern (10, 20), das zur Durchführung eines Verfahrens nach einem der vorhergehenden Ansprüche eingerichtet ist.

11. System mit einer Anlage mit wenigstens einem Roboter, insbesondere mehreren Robotern (10, 20), und einem Mittel (30 - 33) zum Überwachen der Anlage nach einem Anspruch 10.

12. Computerprogrammprodukt mit einem Programmcode, der auf einem von einem Computer lesbaren Medium gespeichert ist, zur Durchführung eines Verfahrens nach einem der Ansprüche 1 bis 9 auf einem Mittel zum Überwachen einer Anlage.

## Claims

1. Method for monitoring an installation comprising at least one robot, in particular a plurality of robots (10, 20), comprising the following steps:
- monitoring (S50) a distance region (A10; A20) of at least one robot (10, 20) of the installation; and
- transferring (S70) said robot into a safe state on the basis of a detection (S20) of a position of at least one person (40) within said distance region, **characterized by** the following steps:
- performing (S70) a work process of the robot until an interruption point that is predefined, in particular beforehand and/or in a process-dictated manner and/or automatically or by an operator; and
- interrupting (S70) the work process, in particular stopping the robot, in particular without interrupting its power supply, and/or deactivating at least one, in particular robot-guided, tool, at said interruption point,
- the distance region being predefined on the basis of a work time until an interruption point, in particular a maximum work time between two interruption points and/or a work time until a next interruption point in the work process.

2. Method according to either of the two preceding claims, **characterized by** the following step:
- continuing the interrupted work process, in particular moving the robot and/or activating the tool, on the basis of a detection of an operator input and/or absence of persons within the distance region (S50).

3. Method according to any of the preceding claims, **characterized by** at least one of the following steps:
- monitoring the safe state (S80), in particular stoppage of the robot and/or inactivity of the tool; and/or
- monitoring (S60) a safety region of the robot;
and the following step:
- triggering a safety reaction, in particular switching the robot into a human-robot collaboration mode and/or reducing (S90) a speed of the robot or performing (S100) an emergency shutdown of the robot, on the basis of a detection of a violation of the safe state and/or a position of at least one person within the safety region.

4. Method according to any of the preceding claims, **characterized in that** an installation region (F) is predefined and the method comprises at least one of the following steps:
- access control and/or separation (S10) with respect to the predefined installation region; and/or
- determining (S20) positions of all persons (40) within the predefined installation region.

5. Method according to any of the preceding claims, **characterized in that** a position of at least one person (40) is determined on the basis of a device (32) wearable by said person and/or on the basis of a determined position of a position means (34).

6. Method according to the preceding claim, **characterized by** at least one of the following steps:
- monitoring (S30) a maximum distance between device (32) and person (40) and/or the position means and/or a handheld operating unit (34); and/or
- monitoring (S30) a vital function, in particular a heart rate, of the person (40) by means of the device (32); and/or
- monitoring (S30) a height of the device (32) and/or the change therein over time;
and the following step:
- triggering (S40) a safety reaction on the basis of said monitoring.

7. Method according to any of the preceding claims, **characterized in that**
transferring into a safe state comprises the following step:
- reducing (S70) a speed of the robot, in particular in a manner dependent on a position and/or speed of at least one person within the distance region; and/or
triggering a safety reaction comprises the following step:
- reducing (S90) a speed of the robot in a manner dependent on a position and/or speed of at least one person within the distance region.

8. Method according to any of the preceding claims, **characterized in that** on the basis of an actuation of an emergency shutdown apparatus and/or of an enabling apparatus, in particular of the device (32), and/or a position and/or speed of at least one person (40) within the distance and/or safety region, the safe state is modified and/or the safety reaction is modified and/or triggered.

9. Method according to any of the preceding claims, **characterized by** the following step:
- indicating, in particular visually indicating (S70), the distance region and/or presence of at least one person within the distance region and/or a safe state.

10. Means (30-33) for monitoring an installation comprising at least one robot, in particular a plurality of robots (10, 20), which is configured for carrying out a method according to any of the preceding claims.

11. System comprising an installation comprising at least one robot, in particular a plurality of robots (10, 20), and a means (30-33) for monitoring the installation according to Claim 10.

12. Computer program product comprising a program code stored on a computer-readable medium, for carrying out a method according to any of Claims 1 to 9 on a means for monitoring an installation.

## Revendications

1. Procédé de surveillance d'une installation comprenant au moins un robot, notamment plusieurs robots (10, 20), ledit procédé comprenant les étapes :
- surveiller (S50) une plage de distance (A10 ; A20) d'au moins un robot (10, 20) de l'installation ; et
- transférer (S70) ce robot dans un état sécurisé sur la base d'une détection (S20) d'une position d'au moins une personne (40) dans cette plage de distance, **caractérisé par** les étapes suivantes :
- effectuer (S70) un processus de travail du robot jusqu'à un point d'interruption spécifié, notamment à l'avance et/ou conditionné par le processus et/ou automatiquement ou par un opérateur ; et
- interrompre (S70) le processus de travail, notamment arrêter le robot, notamment sans interrompre son alimentation en énergie, et/ou désactiver au moins un outil, notamment un outil guidé par le robot, à ce point d'interruption,
- la plage de distance étant spécifiée sur la base d'un temps de travail jusqu'à un point d'interruption, en particulier un temps de travail maximum entre deux points d'interruption et/ou un temps de travail jusqu'à un point d'interruption suivant dans le processus de travail.

2. Procédé selon l'une des deux revendications précédentes, **caractérisé par** l'étape suivante :
- poursuivre le processus de travail interrompu, en particulier déplacer le robot et/ou activer l'outil, sur la base d'une détection d'une intervention de l'opérateur et/ou d'une absence de personnes à l'intérieur de la plage de distance (S50).

3. Procédé selon l'une des revendications précédentes, **caractérisé par** l'une au moins des étapes suivantes :
- surveiller l'état de sécurité (S80), notamment un arrêt du robot et/ou une inactivité de l'outil ; et/ou
- surveiller (S60) une zone de sécurité du robot ;
et l'étape suivante :
- déclencher une réponse de sécurité, notamment commuter le robot dans un mode de collaboration hommerobot et/ou réduire (S90) une vitesse du robot ou effectuer (S100) un arrêt d'urgence du robot, sur la base de la détection d'une violation de l'état de sécurité et/ou d'une position d'au moins une personne à l'intérieur de la zone de sécurité.

4. Procédé selon l'une des revendications précédentes, **caractérisé en ce qu'**une zone d'installation (F) est spécifiée et le procédé comporte l'une au moins des étapes suivantes :
- contrôler et/ou isoler (S10) l'accès à la zone d'installation spécifiée ; et/ou
- déterminer (S20) les positions de toutes les personnes (40) à l'intérieur de la zone d'installation spécifiée.

5. Procédé selon l'une des revendications précédentes, **caractérisé en ce qu'**une position d'au moins une personne (40) est déterminée sur la base d'un dispositif (32) que cette personne peut porter et/ou d'une position déterminée d'un moyen de positionnement (34) .

6. Procédé selon la revendication précédente, **caractérisé par** l'une au moins des étapes suivantes :
- surveiller (S30) une distance maximale entre le dispositif (32) et la personne (40) et/ou le moyen de positionnement et/ou un appareil de commande à main (34) ; et/ou
- surveiller (S30) une fonction vitale, notamment un rythme cardiaque, de la personne (40) au moyen du dispositif (32) ; et/ou
- surveiller (S30) une hauteur du dispositif (32) et/ou sa variation dans le temps ;
et l'étape suivante :
- déclencher (S40) une réponse de sécurité sur la base de cette surveillance.

7. Procédé selon l'une des revendications précédentes, **caractérisé en ce que**
le transfert dans un état de sécurité comprend l'étape suivante :
- réduire (S70) une vitesse du robot, notamment en fonction d'une position et/ou vitesse d'au moins une personne à l'intérieur de la plage de distance ; et/ou le déclenchement d'une réponse de sécurité comprend l'étape suivante :
- réduire (S90) une vitesse du robot en fonction d'une position et/ou de la vitesse d'au moins une personne dans la plage de distance.

8. Procédé selon l'une des revendications précédentes, **caractérisé en ce que** l'état de sécurité est modifié et/ou la réponse de sécurité est modifiée et/ou déclenchée sur la base d'un actionnement d'un arrêt d'urgence et/ou d'un module de validation, en particulier du dispositif (32), et/ou d'une position et/ou d'une vitesse d'au moins une personne (40) à l'intérieur de la plage de distance et/ou de la zone de sécurité.

9. Procédé selon l'une des revendications précédentes, **caractérisé par** l'étape suivante :
- afficher, notamment afficher optiquement (S70), la plage de distance et/ou la présence d'au moins une personne à l'intérieur de la plage de distance et/ou d'un état de sécurité.

10. Moyen (30-33) de surveillance d'une installation munie d'au moins un robot, notamment d'une pluralité de robots (10, 20), lequel moyen est conçu pour mettre en œuvre un procédé selon l'une des revendications précédentes.

11. Système comprenant une installation munie d'au moins un robot, notamment de plusieurs robots (10, 20), et un moyen (30-33) de surveillance de l'installation selon la revendication 10.

12. Progiciel comprenant un code de programme, qui est mémorisé sur un support lisible par ordinateur, pour mettre en œuvre un procédé selon l'une des revendications 1 à 9 sur un moyen de surveillance d'une installation.
